# EUROPEAN PATENT SPECIFICATION

(11) **EP 3 177 060 B1**
(45) Date of publication and mention of the grant of the patent: **22.05.2019**
(21) Application number: 14899991.5
(22) Date of filing: 21.08.2014
(51) Int. Cl.: H04W 24/10, H04W 72/12, H04W 72/04, H04B 7/024

(54) **COORDINATED MULTI-POINT TRANSMISSION METHOD AND APPARATUS**
VERFAHREN UND VORRICHTUNG FÜR KOORDINIERTE MEHRPUNKTÜBERTRAGUNG
PROCÉDÉ ET DISPOSITIF DE TRANSMISSION MULTIPOINT COORDONNÉE

(43) Date of publication of application: 07.06.2017
(73) Proprietor: Huawei Technologies Co., Ltd., Longgang District Shenzhen, Guangdong 518129 (CN)
(72) Inventor: XU, Xiuqiang, Shenzhen Guangdong 518129 (CN); JALILI, Bahareh, Shenzhen Guangdong 518129 (CN); DIANATI, Mehrdad, Shenzhen Guangdong 518129 (CN)
(74) Representative: Maiwald Patent- und Rechtsanwaltsgesellschaft mbH
(86) International application number: PCT/CN2014/084908
(87) International publication number: WO 2016/026119

(56) References cited:
- EP-A2- 2 282 413
- WO-A1-2011/023217
- WO-A1-2013/077392
- WO-A1-2013/108908
- WO-A1-2013/111412
- CN-A- 101 827 387
- CN-A- 102 348 289
- CN-A- 102 480 756
- CN-A- 103 079 277
- CN-A- 103 929 817
- US-A1- 2012 122 468

## Description

### TECHNICAL FIELD

The present invention relates to the field of communications technologies, and in particular, to a coordinated multipoint transmission method and apparatus.

### BACKGROUND

A coordinated multipoint transmission (Coordinated Multi-Point, CoMP) technology is a technology for utilizing inter-cell interference. In the technology, a potential interfering signal is converted into a wanted signal, so as to enhance network performance. According to different data processing methods, coordinated multipoint transmission technologies are generally classified into two types: one is a joint transmission (Joint Transmission, CoMP-JT) technology, and the other is a coordinated beamforming (Coordinated Beamforming, CoMP-CB) technology.

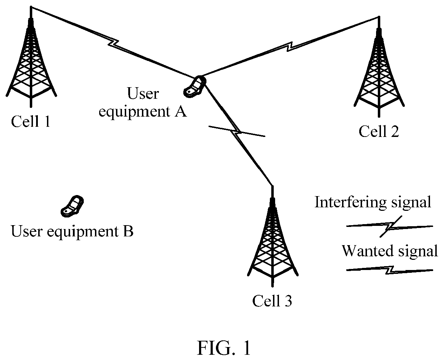

FIG. 1 shows a schematic diagram of an application of a joint transmission technology. A coordinated multipoint transmission set (referred to as a coordinated set for short hereinafter) is formed by a cell 1 and a cell 2, which serve same user equipment (User Equipment, UE) on a same time-frequency resource, that is, user equipment A in FIG. 1. In this way, for the user equipment A, all signals in the two cells in the coordinated set are wanted signals. An interfering signal is from a neighboring cell in a non-coordinated set, such as a cell 3, or from a neighboring coordinated set.

In the prior art, a base station allocates a joint transmission cell for a UE. However, in an actual system, because a great difference may exist between channels that are between different UEs and a same base station, and a channel between a UE and a base station is time-varying, for different UEs, the following case may occur: Still using FIG. 1 as an example, the user equipment A in the coordinated set formed by the cell 1 and the cell 2 can obtain a relatively large gain when performing coordinated transmission in the coordinated set, but a channel condition of user equipment B in the coordinated set determines that an effect of performing coordinated transmission in the coordinated set formed by the cell 1 and the cell 2 by the user equipment B is not so good as that in a coordinated set formed by the cell 1 and the cell 3. However, during allocation performed by the base station, specific statuses of all UEs may not be considered. As a result, transmission quality of some UEs is relatively poor.

US2014/348096A1 relates to the provision of a radio communication system, a radio base station apparatus and a radio communication method which can realize high transmission rate while reducing the calculation load involved in CoMP scheduling. It is described that there is provided a radio communication system including a plurality of radio base station apparatuses and a user terminal that is configured to be able to perform coordinated multiple point transmission/reception with the plurality of radio base station apparatuses, and, in this radio communication system: the radio base station apparatus has: an operation section that calculates the priority of a pattern to be a candidate for radio resource allocation, which is determined based on candidate cell information that is reported from the user terminal and that shows a candidate of a cell to perform coordinated multiple point transmission; and a scheduling section that executes scheduling based on the priority calculated in the operation section; and the user terminal has: a reporting section that reports the candidate cell information to the radio base station apparatus.

WO2011/023217A1 describes that feedback information is received from user equipments served by jointly processed data streams of a coordinated multipoint transmission at each base station of base stations serving the jointly processed data streams, and scheduling data is decided for the user equipments based on the feedback information and scheduling rules. The scheduling rules may be determined at least in part by one of the base stations and scheduling decisions by the base stations may be synchronized. Scheduling decisions may be transferred via a backhaul link and/or over the air, which may include scheduling decisions for future transmission time intervals.

US2012/122468A1 describes a coordinated scheduling method which includes that: a base station establishes the correspondences between sub-bands and spatial information, and communicates the correspondences between sub-bands and spatial information with the base station of a cooperative cell; said base station implements coordinated scheduling with the base station of said cooperative cell according to the correspondences between sub-bands and spatial information. The method implements that less scheduling information is transmitted via an X2 interface, and thus promotes the application of the CBF solution in an actual system.

EP2282413A2 describes a method for coordinated multi-cell transmission, a central controller and a User Equipment. The method includes: determining, by a central controller, at least one candidate cooperating set in a super-cell, wherein each cell in the super-cell belongs to at least one candidate cooperating set, and broadcasting information of the at least one candidate cooperating set determined to all UEs in the super-cell; selecting, by each UE, a candidate cooperating set from the at least one candidate cooperating set as a cooperating set of the UE, and feeding back information of the cooperating set selected to the central controller; and determining, by the central controller, all cooperating sets in the super-cell and UEs participating in cooperation in each cooperating set according to the information of the selected cooperating set fed back by each UE.

### SUMMARY

Embodiments of the present invention provide a coordinated multipoint transmission method and apparatus, so as to resolve a technical problem that transmission quality of user equipment is relatively poor due to a fact that a cell cannot be reused.

In a first aspect, there is provided a coordinated multipoint transmission method as defined in appended claim 1.

In a second aspect, there is provided a coordinated multipoint transmission apparatus as defined in appended claim 9.

According to a first example of the present invention, a coordinated multipoint transmission method is provided, including:
receiving candidate cell lists fed back by at least two user equipments UEs in a cell group, where the cell group includes at least one cell, the candidate cell list includes information about a cell measured by the UE that feeds back the candidate cell list, and each candidate cell list corresponds to one UE; and
respectively matching the at least two UEs with corresponding virtual schedulers according to the received candidate cell lists, where there is a one-to-one correspondence between virtual scheduler and a cell set, so that the at least two UEs are respectively scheduled by the matched virtual schedulers to perform coordinated multipoint transmission in corresponding cell sets.

With reference to the first example, in a first possible implementation manner of the first example, an intersection set exists between cell sets corresponding to the virtual schedulers with which the at least two UEs are respectively matched.

With reference to the first example or the first possible implementation manner of the first example, in a second possible implementation manner of the first example, the receiving candidate cell lists fed back by atleast two UEs in a cell group includes:
receiving the candidate cell lists sent by the at least two UEs in the cell group by using K base stations, where K is a positive integer.

With reference to the first example or the first possible implementation manner of the first example, in a third possible implementation manner of the first example, the receiving candidate cell lists fed back by at least two UEs in a cell group includes:
receiving the candidate cell list fed back by a UE in a cell corresponding to a receiving device; and
receiving the candidate cell list of a UE sent by a base station to which a cell, in the cell group, other than the cell corresponding to the receiving device belongs.

With reference to any one of the first example or the first to the third possible implementation manners of the first example, in a fourth possible implementation manner of the first example, the respectively matching the at least two UEs with corresponding virtual schedulers according to the received candidate cell lists includes:
determining information about a cell included in the candidate cell list reported by each UE;
determining, according to the determined information about the cell, a cell corresponding to each UE; and
determining a virtual scheduler corresponding to a cell set formed by all cells corresponding to a corresponding UE, and matching the UE with the virtual scheduler.

With reference to any one of the first example or the first to the fourth possible implementation manners of the first example, in a fifth possible implementation manner of the first example, after the respectively matching the at least two UEs with corresponding virtual schedulers, the method further includes:
generating a candidate resource list for each virtual scheduler according to the received candidate cell list, where the candidate resource list includes information about an air interface resource block allocated to a corresponding virtual scheduler; and
allocating a resource block to each virtual scheduler according to the generated candidate resource list.

With reference to the fifth possible implementation manner of the first example, in a sixth possible implementation manner of the first example, the generating a candidate resource list for each virtual scheduler according to the received candidate cell list includes:
determining a weight of each resource block for each virtual scheduler; and
generating the candidate resource list for a corresponding virtual scheduler according to the determined weight of each resource block for each virtual scheduler.

With reference to the sixth possible implementation manner of the first example, in a seventh possible implementation manner of the first example, the determining a weight of each resource block for each virtual scheduler includes:
counting, for each virtual scheduler, a total quantity of times that each resource block is valid in the candidate cell list fed back by each UE that belongs to the virtual scheduler; and
using the total quantity of times that each resource block is valid as a weight of a corresponding resource block.

With reference to the fifth possible implementation manner, or the sixth possible implementation manner, or the seventh possible implementation manner of the first example, in an eighth possible implementation manner of the first example, the allocating a resource block to each virtual scheduler according to the generated candidate resource list includes:
separately performing the following steps by taking i as an integer from 1 to N:
comparing, for an i^{th} resource block, weights corresponding to the i^{th} resource block that are in the generated candidate resource lists; and
allocating the i^{th} resource block for a virtual scheduler corresponding to a candidate resource list with a largest weight, where N is a total quantity of resource blocks included in the cell group.

According to a second example of the present invention, a coordinated multipoint transmission apparatus is provided, including:
a receiving module, configured to receive candidate cell lists fed back by at least two user equipments UEs in a cell group, where the cell group includes at least one cell, the candidate cell list includes information about a cell measured by the UE that feeds back the candidate cell list, and each candidate cell list corresponds to one UE; and
a matching module, configured to respectively match the at least two UEs with corresponding virtual schedulers according to the received candidate cell lists, where there is a one-to-one correspondence between virtual scheduler and a cell set, so that the at least two UEs are respectively scheduled by the matched virtual schedulers to perform coordinated multipoint transmission in corresponding cell sets.

With reference to the second example, in a first possible implementation manner of the second example, an intersection set exists between cell sets corresponding to the virtual schedulers with which the at least two UEs are respectively matched.

With reference to the second example or the first possible implementation manner of the second example, in a second possible implementation manner of the second example, the receiving module is specifically configured to receive the candidate cell lists sent by the at least two UEs in the cell group by using K base stations, where K is a positive integer.

With reference to the second example or the first possible implementation manner of the second example, in a third possible implementation manner of the second example, the receiving module is specifically configured to receive the candidate cell list fed back by a UE in a cell corresponding to the apparatus, and receive the candidate cell list of a UE sent by a base station to which a cell, in the cell group, other than the cell corresponding to the apparatus belongs.

With reference to any one of the second example or the first to the third possible implementation manners of the second example, in a fourth possible implementation manner of the second example, the matching module is specifically configured to determine information about a cell included in the candidate cell list reported by each UE; determine, according to the determined information about the cell, a cell corresponding to each UE; and determine a virtual scheduler corresponding to a cell set formed by all cells corresponding to a corresponding UE, and match the UE with the virtual scheduler.

With reference to any one of the second example or the first to the fourth possible implementation manners of the second example, in a fifth possible implementation manner of the second example, the apparatus further includes a generating module and an allocation module, where
the generating module is configured to generate a candidate resource list for each virtual scheduler according to the received candidate cell list, where the candidate resource list includes information about an air interface resource block allocated to a corresponding virtual scheduler; and
the allocation module is configured to allocate a resource block to each virtual scheduler according to the generated candidate resource list.

With reference to any one of the second example or the first to the fifth possible implementation manners of the second example, in a sixth possible implementation manner of the second example, the generating module is specifically configured to determine a weight of each resource block for each virtual scheduler; and generate the candidate resource list for a corresponding virtual scheduler according to the determined weight of each resource block for each virtual scheduler.

With reference to the sixth possible implementation manner of the second example, in a seventh possible implementation manner of the second example, that the generating module is specifically configured to determine a weight of each resource block for each virtual scheduler is specifically: counting, for each virtual scheduler, a total quantity of times that each resource block is valid in the candidate cell list fed back by each UE that belongs to the virtual scheduler; and using the total quantity of times that each resource block is valid as a weight of a corresponding resource block.

With reference to the fifth possible implementation manner, or the sixth possible implementation manner, or the seventh possible implementation manner of the second example, in an eighth possible implementation manner of the second example, the allocation module is specifically configured to separately perform the following steps by taking i as an integer from 1 to N:
comparing, for an i^{th} resource block, weights corresponding to the i^{th} resource block that are in the generated candidate resource lists; and
allocating the i^{th} resource block for a virtual scheduler corresponding to a candidate resource list with a largest weight, where N is a total quantity of resource blocks included in the cell group.

According to a third example of the present invention, a coordinated multipoint transmission apparatus is provided, including:
a memory, configured to store an instruction;
a receiver, configured to receive candidate cell lists fed back by at least two user equipments UEs in a cell group, where the cell group includes at least one cell, the candidate cell list includes information about a cell measured by the UE that feeds back the candidate cell list, and each candidate cell list corresponds to one UE; and
a processor, configured to execute the instruction to respectively match the at least two UEs with corresponding virtual schedulers according to the received candidate cell lists, where there is a one-to-one correspondence between virtual scheduler and a cell set, so that the at least two UEs are respectively scheduled by the matched virtual schedulers to perform coordinated multipoint transmission in corresponding cell sets.

With reference to the third example, in a first possible implementation manner of the third example, an intersection set exists between cell sets corresponding to the virtual schedulers with which the at least two UEs are respectively matched.

With reference to the third example or the first possible implementation manner of the third example, in a second possible implementation manner of the third example, the receiver is specifically configured to receive the candidate cell lists sent by the at least two UEs in the cell group by using K base stations, where K is a positive integer.

With reference to the third example or the first possible implementation manner of the third example, in a third possible implementation manner of the third example, the receiver is specifically configured to receive the candidate cell list fed back by a UE in a cell corresponding to the apparatus, and receive the candidate cell list of a UE sent by a base station to which a cell, in the cell group, other than the cell corresponding to the apparatus belongs.

With reference to any one of the third example or the first to the third possible implementation manners of the third example, in a fourth possible implementation manner of the third example, the processor is specifically configured to execute the instruction to: determine information about a cell included in the candidate cell list reported by each UE; determine, according to the determined information about the cell, a cell corresponding to each UE; and determine a virtual scheduler corresponding to a cell set formed by all cells corresponding to a corresponding UE, and match the UE with the virtual scheduler.

With reference to any one of the third example or the first to the fourth possible implementation manners of the third example, in a fifth possible implementation manner of the third example, the processor is further configured to execute the instruction to: after the at least two UEs are respectively matched with the corresponding virtual schedulers, generate a candidate resource list for each virtual scheduler according to the received candidate cell list, where the candidate resource list includes information about an air interface resource block allocated to a corresponding virtual scheduler; and allocate a resource block to each virtual scheduler according to the generated candidate resource list.

With reference to any one of the third example or the first to the fifth possible implementation manners of the third example, in a sixth possible implementation manner of the third example, that the processor is further configured to generate a candidate resource list for each virtual scheduler according to the received candidate cell list is specifically: executing the instruction to determine a weight of each resource block for each virtual scheduler and generate the candidate resource list for a corresponding virtual scheduler according to the determined weight of each resource block for each virtual scheduler.

With reference to the sixth possible implementation manner of the third example, in a seventh possible implementation manner of the third example, that the processor is further configured to execute the instruction to determine a weight of each resource block for each virtual scheduler is specifically: executing the instruction to count, for each virtual scheduler, a total quantity of times that each
resource block is valid in the candidate cell list fed back by each UE that belongs to the virtual scheduler, and use the total quantity of times that each resource block is valid as a weight of a corresponding resource block.

With reference to the fifth possible implementation manner, or the sixth possible implementation manner, or the seventh possible implementation manner of the third example, in an eighth possible implementation manner of the third example, that the processor is further configured to allocate a resource block to each virtual scheduler according to the generated candidate resource list is specifically: executing the instruction to separately perform the following steps by taking i as an integer from 1 to N:
comparing, for an i^{th} resource block, weights corresponding to the i^{th} resource block that are in the generated candidate resource lists; and
allocating the i^{th} resource block for a virtual scheduler corresponding to a candidate resource list with a largest weight, where N is a total quantity of resource blocks included in the cell group.

In the embodiments of the present invention, a candidate cell list fed back by a UE may be received, so that each UE is matched with a corresponding virtual scheduler, that is, a UE is matched with a virtual scheduler according to a candidate cell list reported by the UE, so that each UE can be matched with a corresponding cell set with better transmission quality, thereby improving transmission quality of the UE. In addition, different UEs may be scheduled by different virtual schedulers, so as to implement joint transmission in different cell sets. Each UE may be scheduled by a corresponding virtual scheduler, thereby alleviating load of a base station, and enhancing scheduling efficiency.

### BRIEF DESCRIPTION OF DRAWINGS

FIG. 1 is a schematic diagram of an application of joint transmission in the prior art;
FIG. 2 is a schematic diagram of a resource block according to an embodiment of the present invention;
FIG. 3 is a schematic diagram of an application scenario of an embodiment of the present invention;
FIG. 4 is a main flowchart of a coordinated multipoint transmission method according to an embodiment of the present invention;
FIG. 5 is a schematic diagram of a candidate cell list according to an embodiment of the present invention;
FIG. 6 is a schematic diagram of a candidate resource list according to an embodiment of the present invention;
FIG. 7 is a main structural block diagram of a coordinated multipoint transmission apparatus according to an embodiment of the present invention; and
FIG. 8 is a main schematic structural diagram of a coordinated multipoint transmission apparatus according to an embodiment of the present invention.

### DESCRIPTION OF EMBODIMENTS

A coordinated multipoint transmission method according to aspects of the present invention may include: receiving candidate cell lists fed back by at least two user equipments UEs in a cell group, where the cell group includes at least one cell, the candidate cell list includes information about a cell measured by the UE that feeds back the candidate cell list, and each candidate cell list corresponds to one UE; and respectively matching the at least two UEs with corresponding virtual schedulers according to the received candidate cell lists, where there is a one-to-one correspondence between virtual scheduler and a cell set, so that the at least two UEs are respectively scheduled by the matched virtual schedulers to perform coordinated multipoint transmission in corresponding cell sets.

In certain aspects of the present invention, a candidate cell list fed back by a UE may be received, so that each UE is matched with a corresponding virtual scheduler, that is, a UE is matched with a virtual scheduler according to a candidate cell list reported by the UE, so that each UE can be matched with a corresponding cell set with better transmission quality, thereby improving transmission quality of the UE. In addition, different UEs may be scheduled by different virtual schedulers, so as to implement joint transmission in different cell sets. Each UE may be scheduled by a corresponding virtual scheduler, thereby alleviating load of a base station, and enhancing scheduling efficiency.

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention, as defined by the appended claims.

Technologies described in this specification may be applied to various communications systems, for example, current 2G (the second generation mobile communication technology) and 3G (the third generation mobile communication technology) communications systems, a 4G (the fourth generation mobile communication technology) communications system, and a next-generation communications system, such as: a Global System for Mobile Communications (Global System for Mobile communications, GSM), a Code Division Multiple Access (Code Division Multiple Access, CDMA) system, a Time Division Multiple Access (Time Division Multiple Access, TDMA) system, a Wideband Code Division Multiple Access (Wideband Code Division Multiple Access Wireless, WCDMA) system, a Frequency Division Multiple Access (Frequency Division Multiple Addressing, FDMA) system, an Orthogonal Frequency-Division Multiple Access (Orthogonal Frequency-Division Multiple Access, OFDMA) system, a single-carrier FDMA (SC-FDMA) system, a General Packet Radio Service (GPRS, General Packet Radio Service) system, a Long Term Evolution (Long Term Evolution, LTE) system, and other communications systems.

This specification describes various aspects with reference to user equipment and/or a base station.

The user equipment may be a wireless terminal or a wired terminal. The wireless terminal may refer to a device that provides a user with voice and/or data connectivity, a handheld device with a radio connection function, or another processing device connected to a wireless modem. The wireless terminal may communicate with one or more core networks through a radio access network (such as Radio Access Network, RAN). The wireless terminal may be a mobile terminal, such as a mobile phone (also referred to as a "cellular" phone) and a computer with a mobile terminal, for example, may be a portable, pocket-sized, handheld, computer built-in, or in-vehicle mobile apparatus, which exchanges voice and/or data with the radio access network. For example, it may be a device such as a personal communication service (Personal Communication Service, PCS) phone, a cordless telephone set, a Session Initiation Protocol (SIP) phone, a wireless local loop (Wireless Local Loop, WLL) station, or a personal digital assistant (Personal Digital Assistant, PDA). The wireless terminal may also be called a system, a subscriber unit (Subscriber Unit), a subscriber station (Subscriber Station), a mobile station (Mobile Station), a mobile terminal (Mobile), a remote station (Remote Station), an access point (Access Point), a remote terminal (Remote Terminal), an access terminal (Access Terminal), a user terminal (User Terminal), a user agent (User Agent), a user device (User Device), or user equipment (User Equipment).

The base station (for example, an access point) may refer to a device in communication with a wireless terminal via one or more sectors at an air interface in an access network. The base station may be configured to mutually convert a received over-the-air frame and an IP packet and serve as a router between the wireless terminal and a rest portion of the access network, where the rest portion of the access network may include an Internet protocol (IP) network. The base station may coordinate attribute management of the air interface. For example, the base station may be a base station (Base Transceiver Station, BTS) in GSM or the CDMA, may be a base station (NodeB) in WCDMA, or may be an evolved NodeB (NodeB, eNB, or e-NodeB, evolutional Node B) in the LTE, which is not limited in the this application.

In addition, the terms "system" and "network" in this specification may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

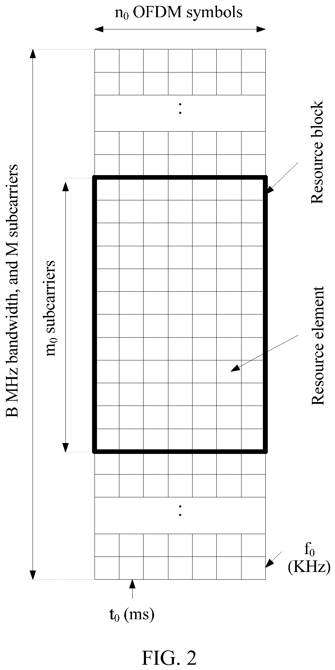

An orthogonal frequency division multiplexing (Orthogonal Frequency Division Multiplexing, OFDM) technology is a multi-carrier transmission technology, and is widely applied to a fourth generation cellular communications system, such as a Long Term Evolution (Long-Term Evolution, LTE) system or a Worldwide Interoperability for Microwave Access (Worldwide Interoperability for Microwave Access, WiMAX) system. As shown in FIG. 2, a transmission resource of a cellular communications system that uses the technology (referred to as an OFDM system for short hereinafter) generally uses a two-dimensional rectangle resource raster structure jointly formed by a time domain and a frequency domain. The frequency domain is formed by consecutive subcarriers, and the time domain is formed by consecutive OFDM symbols. A relationship between a subcarrier interval f0 (unit: kHz) in the frequency domain and a length t0 (unit: ms) of an OFDM symbol in the time domain is t0 = 1/f0. A transmission resource determined by an OFDM symbol in the time domain and a subcarrier in the frequency domain is referred to as a resource element (Resource Element, RE), which is a smallest unit of a transmission resource in the OFDM system. Each resource element carries one modulation symbol. In the OFDM system, a resource block (Resource Block, RB) is generally used as a smallest unit to perform resource allocation. Each resource block is formed by m0 subcarriers that are consecutive in the frequency domain and n0 OFDM symbols that are consecutive in the time domain, that is, the entire transmission resource is divided into resource blocks that are consecutive in both the frequency domain and the time domain. Each resource block is formed by m0^{∗}n0 resource elements that are consecutive in both the frequency domain and the time domain. It is assumed that bandwidth of the OFDM system is B (unit: MHz), and the bandwidth totally has NSC subcarriers, and is divided into NRB resource blocks in the frequency domain. For example, LTE is a typical OFDM system. A scheduling period of LTE is one subframe (Subframe), where the subframe is formed by 2^{∗}n0 OFDM symbols that are consecutive in the time domain. From a perspective of a resource raster, the subframe is formed by all resource blocks in the frequency domain and two neighboring resource blocks in the time domain. Ten consecutive subframes form a radio frame (Frame).

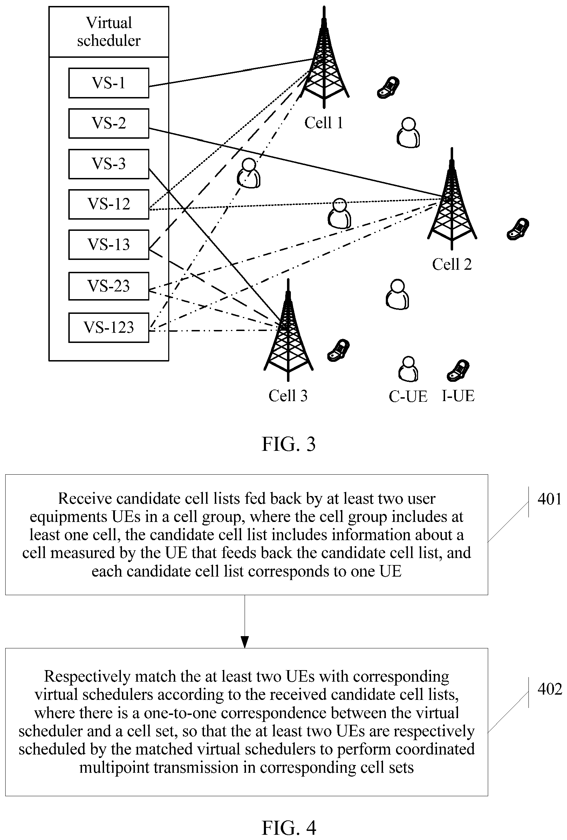

A network scenario at which an embodiment of the present invention is aimed is shown in FIG. 3: A cell 1, a cell 2, and a cell 3 form a cell group. Any two or three cells in the cell group may form a coordinated set to perform coordinated transmission for a corresponding UE. The cell 1, the cell 2, and the cell 3 may belong to a same base station, or may belong to different base stations. It should be noted that the cell group may also include more than three cells. However, coordinated transmission brings about extra information exchange and processing overheads. A research indicates that a quantity of cells in a coordinated set preferably does not exceed three. Therefore, in the embodiment of the present invention, a cell group formed by three cells is used as an example. In this way, in the embodiment of the present invention, a coordinated set formed includes a maximum of three cells. Certainly, an embodiment in which a cell group includes more cells is also included in the present invention.

In an aspect of the present invention, if user equipment independently served by a cell is used as a special coordination manner, the cell group totally has seven potential coordinated sets. In the embodiment of the present invention, the coordinated set is also referred to as a cell set. The seven potential coordinated sets are respectively: {cell 1}, {cell 2}, {cell 3}, {cell 1, cell 2}, {cell 1, cell 3}, {cell 2, cell 3}, and {cell 1, cell 2, cell 3}.

For ease of describing a technical solution in the present invention, for an application scenario shown in FIG. 3, the following definition and description are made.

Virtual schedulers VS-1, VS-2, VS-3, VS-12, VS-13, VS-23, and VS-123: respectively correspond to the potential coordinated sets. For example, the VS-1 corresponds to the coordinated set {cell 1}, and is responsible for scheduling, resource allocation, and the like of all UEs independently served by the cell 1; the VS-12 corresponds to the coordinated set {cell 1, cell 2}, and is responsible for scheduling, resource allocation, and the like of all UEs jointly served by the cell 1 and the cell 2; the VS-123 corresponds to the coordinated set {cell 1, cell 2, cell 3}, and is responsible for scheduling, resource allocation, and the like of all UEs jointly served by the cell 1, the cell 2, and the cell 3.

Independent user equipment (I-UE) and coordinated user equipment (C-UE): The independent user equipment indicates that the UE does not need multiple cells to perform coordinated transmission and may achieve a better effect when independently served by only one cell. The coordinated user equipment indicates that the UE needs multiple cells to perform coordinated transmission, so as to achieve a better effect.

The virtual scheduler is a logical node. The technical solution provided in certain aspects of the present invention may be implemented in the following two cases according to different locations of a network element entity that implements a function of the virtual scheduler:
1. Centralized solution: The network element entity that implements the function of the virtual scheduler is an independent network element. In this case, an interface by which communication can be performed is required to exist between the network element and a base station in which each cell is located, and by using the interface, related information and an instruction can be exchanged. The network element may be located on a side of one of the base stations, or may be independent of the base stations. In this solution, the virtual scheduler may also be referred to as a centralized virtual scheduler.
2. Distributed solution: The network element entity that implements the function of the virtual scheduler is located in a base station in which each cell is located. For example, the virtual schedulers VS-1, VS-2, VS-3 are respectively located in base stations in which the cell 1, the cell 2, and the cell 3 are respectively located; the VS-12 is located in both base stations in which the cell 1 and the cell 2 are respectively located; the VS-13 is located in both base stations in which the cell 1 and the cell 3 are respectively located; the VS-23 are located in both base stations in which the cell 2 and the cell 3 are respectively located; the VS-123 is located in all base stations in which the cell 1, the cell 2, and the cell 3 are respectively located. In this case, an interface by which communication can be performed is required to exist between base stations in which all cells are located, and by using the interface, related information and an instruction can be exchanged. In this solution, each virtual scheduler may also be referred to as a distributed virtual scheduler.

In an aspect of the present invention, there is a one-to-one correspondence between virtual scheduler and the potential coordinated set, and one virtual scheduler uniquely corresponds to one coordinated set. That is, if it is determined that a UE is corresponding to a virtual scheduler, a coordinated set corresponding to the UE is uniquely determined. Correspondingly, if it is determined that a UE is corresponding to a coordinated set, a virtual scheduler corresponding to the UE is uniquely determined.

The following further describes certain aspects of the present invention in detail with reference to the accompanying drawings of the specification.

Referring to FIG. 4, an aspect of the present invention provides a coordinated multipoint transmission method. A main process of the method is as follows. In a centralized solution, the method may be applied to the centralized virtual scheduler. In a distributed solution, the method may be applied to a base station in the cell group. It should be noted that the centralized virtual scheduler may be considered as a combination of multiple distributed virtual schedulers, and there is a controller configured to control the distributed virtual schedulers. That is, if the method is applied to the centralized virtual scheduler, the method is actually performed by the controller configured to control the distributed virtual schedulers that form the centralized virtual scheduler.

Step 401: Receive candidate cell lists fed back by at least two UEs in a cell group, where the cell group includes at least one cell, the candidate cell list includes information about a cell measured by the UE that feeds back the candidate cell list, and each candidate cell list corresponds to one UE.

Descriptions are respectively made in the following according to the centralized solution and the distributed solution.

### 1. Centralized solution

The cell group may have multiple UEs, and each UE belongs to one cell of the cell group.

A UE in each cell may measure signal quality or signal strength of a current serving cell and a neighboring cell by using a resource block as a granularity, and generate one or more candidate cell lists according to a measurement result. For a UE in the cell group, a neighboring cell of the UE is a cell, in the cell group, other than a current serving cell that serves the UE.

For a UE that generates a candidate cell list, after generating the candidate cell list, the UE may feed back the generated candidate cell list to a base station to which the UE belongs.

After receiving the candidate cell list fed back by the UE, the corresponding base station may bind each candidate cell list to a UE that generates the candidate cell list, and then forward the candidate cell list to the centralized virtual scheduler. The binding is performed for a purpose of ensuring that the centralized virtual scheduler can differentiate each UE that generates each candidate cell list. There may be multiple specific methods for binding. For example, one method may be adding identification information of a corresponding UE into a candidate cell list. In this way, in the received candidate cell list, the virtual scheduler may determine the corresponding UE according to the identification information that is of the UE and that is added into the candidate cell list.

Therefore, for the centralized solution, the receiving candidate cell lists fed back by at least two UEs in a cell group in step 401 indicates that the centralized virtual scheduler receives a candidate cell list forwarded by a corresponding base station, rather than that the centralized virtual scheduler directly receives a candidate cell list fed back by a UE.

That is, optionally, in an aspect of the present invention, the receiving candidate cell lists fed back by at least two UEs in a cell group may include: receiving the candidate cell lists sent by the at least two UEs in the cell group by using K base stations, where K is a positive integer. All the K base stations are base stations to which cells in the cell group belong.

### 2. Distributed solution

A UE in each cell in the cell group may measure signal quality or signal strength of a current serving cell and a neighboring cell by using a resource block as a granularity, and generate one or more candidate cell lists according to a measurement result. For a UE in the cell group, a neighboring cell of the UE is a cell, in the cell group, other than a current serving cell that serves the UE.

For a UE that generates a candidate cell list, after generating the candidate cell list, the UE may feed back the generated candidate cell list to a base station to which the UE belongs.

For the base station that receives the candidate cell list, after receiving the candidate cell list, the base station may bind the candidate cell list to the UE that generates the candidate cell list, and after binding is performed, send the received candidate cell list to another base station in the cell group. If cells in the cell group belong to different base stations, and at least two base stations receive a candidate cell list, information may be forwarded between the at least two base stations. The forwarded information is a candidate cell list fed back by a UE and received by each base station. For a purpose and a specific manner of binding, refer to the description in the centralized solution, and details are not described herein.

Therefore, for the distributed solution, the receiving candidate cell lists fed back by at least two UEs in a cell group in step 401 indicates that a base station in the cell group receives a candidate cell list fed back by a corresponding UE.

That is, optionally, in an aspect of the present invention, the receiving candidate cell lists fed back by at least two UEs in a cell group may include: receiving the candidate cell list fed back by a UE in a cell corresponding to a receiving device; and receiving the candidate cell list of a UE sent by a base station to which a cell, in the cell group, other than the cell corresponding to the receiving device belongs.

The receiving device refers to an entity for executing the process shown in FIG. 1. In the distributed solution, the receiving device is a base station. The receiving the candidate cell list fed back by a UE in a cell corresponding to a receiving device indicates that a base station receives a candidate cell list fed back by a UE that is within a control range of the base station; the receiving the candidate cell list of a UE sent by a base station to which a cell, in the cell group, other than the cell corresponding to the receiving device belongs indicates that information is exchanged between base stations, and a base station receives a candidate cell list sent by another base station, where the candidate cell list sent by the another base station is a candidate cell list fed back by a UE that is within a control range of the another base station.

For a base station, receiving a candidate cell list fed back by a UE that is within a control range of the base station and receiving a candidate cell list forwarded by another base station may be executed in any order.

The following describes a candidate cell list and a manner of generating a candidate cell list.

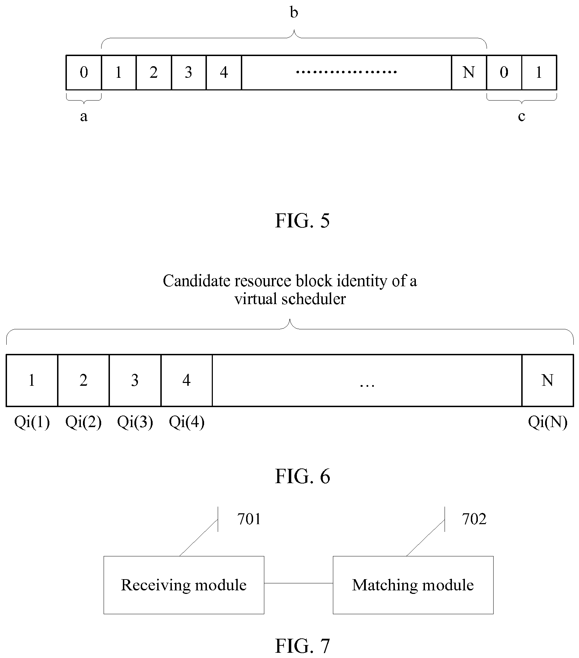

A candidate cell list generated after a UE obtains received signal strength or signal quality on each resource block in a current serving cell and a neighboring cell is shown in FIG. 5.

A candidate cell list totally includes N+3 bits (bit), where N is a quantity of resource blocks of an air interface transmission resource in the cell group. The N+3 bits may be divided into three parts.

A first part includes one bit, as indicated by a part a in FIG. 5, and is used to identify whether a UE that reports the candidate cell list is independent user equipment or coordinated user equipment. For example, if the bit is 0, it indicates that the UE is independent user equipment; or if the bit is 1, it indicates that the UE is coordinated user equipment.

For a UE, when generating a candidate cell list, the UE may determine information about the first M resource blocks with best signal quality or signal strength, where M is a positive integer not greater than N. For example, the UE may sort resource blocks measured by the UE in a descending order according to signal quality or signal strength, and select the first M resource blocks with the best signal quality or signal strength from the resource blocks. If a UE is independent user equipment, the UE generates only one candidate resource list; or if a UE is coordinated user equipment, the UE generates multiple candidate resource lists, and each candidate resource list is for one cell. That is, information about all resource blocks included in one candidate cell list belongs to a same cell.

A UE may determine, according to the following rules, whether the UE is independent user equipment or coordinated user equipment: If all the first M resource blocks with best signal quality or signal strength that are determined by the UE belong to a same cell, the UE determines that the UE is independent user equipment, and a corresponding cell is the cell to which the first M resource blocks belong; or if the first M resource blocks with best signal quality or signal strength that are determined by the UE belong to multiple cells (for example, belong to a cell 1 and a cell 2), the UE determines that the UE is coordinated user equipment, and needs the cell 1 and the cell 2 to form a cell set to perform coordinated transmission.

A second part includes N bits, as indicated by a part b in FIG. 5, and corresponds to information about the N resource blocks of the air interface transmission resource. If a bit corresponding to information about a resource block is 1, it indicates that the resource block corresponding to a cell (the cell is indicated by the third part) belongs to the first M resource blocks, of the UE, with better received signals. In the part b of FIG. 5, each small box represents a resource block, and a numerical value in the small box indicates whether the resource block belongs to the first M resource blocks with the better received signals.

A third part includes two bits, as indicated by a part c in FIG. 5, and is used to indicate a cell to which a resource block in the candidate cell list belongs. For example, an implementation manner is: A combination of 00 indicates the cell 1, a combination of 01 indicates the cell 2, and a combination of 10 indicates a cell 3. Certainly, a cell indicated by a specific numerical value combination may be agreed upon by the UE and the cell, which is not limited in the present invention.

Step 402: Respectively match the at least two UEs with corresponding virtual schedulers according to the received candidate cell lists, where there is a one-to-one correspondence between virtual scheduler and a cell set, so that the at least two UEs are respectively scheduled by the matched virtual schedulers to perform coordinated multipoint transmission in corresponding cell sets.

Optionally, in an aspect of the present invention, an intersection set exists between cell sets corresponding to the virtual schedulers with which the at least two UEs are respectively matched.

Optionally, in an aspect of the present invention, the respectively matching the at least two UEs with corresponding virtual schedulers according to the received candidate cell lists may include: determining information about a cell included in the candidate cell list reported by each UE; determining, according to the determined information about the cell, a cell corresponding to each UE; and determining a virtual scheduler corresponding to a cell set formed by all cells corresponding to a corresponding UE, and matching the UE with the virtual scheduler.

After receiving all candidate cell lists fed back by a UE, the centralized virtual scheduler or a base station in which a cell in the cell group is located may check the first bit of each candidate cell list.

If the bit is 0, in this case, the UE feeds back only one candidate cell list, and it is determined that the UE is independent user equipment. Then, the last two bits of the candidate cell list are checked, and a virtual scheduler to which the UE belongs, that is, a virtual scheduler with which the UE is matched, is determined according to a bit combination manner. For example, if the last two bits are 00, and the cells and the UE reach an agreement in advance that a bit combination of 00 indicates the cell 1, it can be determined that the user is matched with a virtual scheduler VS-1.

If the bit is 1, in this case, the UE feeds back multiple candidate cell lists, and it is determined that the UE is coordinated user equipment. Then, the last two bits of each candidate cell list fed back by the UE are checked, and a virtual scheduler to which the UE belongs, that is, a virtual scheduler with which the UE is matched, is determined according to a bit combination manner. For example, it is assumed that the UE totally feeds back two candidate cell lists, and the last two bits of the two candidate cell lists are respectively 00 and 01. The cells and the user reach an agreement in advance that bit combinations of 00 and 01 respectively indicate the cell 1 and the cell 2, and it can be determined that the UE is matched with a virtual scheduler VS-12.

Further, in an aspect of the present invention, after the respectively matching the at least two UEs with corresponding virtual schedulers, the method may further include: generating a candidate resource list for each virtual scheduler according to the received candidate cell list, where the candidate resource list includes information about an air interface resource block allocated to a corresponding virtual scheduler; and allocating a resource block to each virtual scheduler according to the generated candidate resource list.

The centralized virtual scheduler or a base station to which a cell in the cell group belongs generates a candidate resource list for each virtual scheduler according to the received candidate cell list, where the candidate resource list includes information about an air interface resource block allocated to a corresponding virtual scheduler; and allocates a resource block to each virtual scheduler according to the generated candidate resource list.

Optionally, in an aspect of the present invention, the generating a candidate resource list for each virtual scheduler according to the received candidate cell list includes: determining a weight of each resource block for each virtual scheduler; and generating the candidate resource list for a corresponding virtual scheduler according to the determined weight of each resource block for each virtual scheduler.

Optionally, in an aspect of the present invention, the determining a weight of each resource block for each virtual scheduler includes: counting, for each virtual scheduler, a total quantity of times that each resource block is valid in the candidate cell list fed back by each UE that belongs to the virtual scheduler; and using the total quantity of times that each resource block is valid as a weight of a corresponding resource block.

That a resource block is valid means that a value of the resource block in a corresponding candidate resource list is 1, that is, the resource block is one of the first M resource blocks with better signal quality or signal strength in resource blocks measured by a UE.

For example, a candidate resource list generated for a virtual scheduler VS-i (i=1, 2, 3, 12, 13, 23, 123) is shown in FIG. 6.

The list is totally divided into N parts, corresponding to the N resource blocks of the air interface transmission resource. Each part corresponds to a value Qi(k) (k=1, 2, ..., N), which is used to indicate a degree of necessity of invoking the resource block by the virtual scheduler, that is, used to indicate a weight of the resource block. A larger value indicates a higher degree of necessity, that is, indicates a larger weight of the resource block. A smaller value indicates a lower degree of necessity, that is, indicates a smaller weight of the resource block.

The value may be generated according to the following method: It is assumed that the centralized virtual scheduler or a base station in which a cell is located finishes matching between a UE and each virtual scheduler, that is, the centralized virtual scheduler or the base station in which the cell is located knows a virtual scheduler to which a user belongs. For a k^{th} resource block, a total quantity of times that the k^{th} resource block is valid in all candidate cell lists fed back by these UEs is counted, that is, if a bit of a corresponding location, in a candidate cell list, of the k^{th} resource block is 1, it is considered that the k^{th} resource block is valid in the candidate cell list. The counted total quantity of times is used as a Qi(k) value.

Optionally, in an aspect of the present invention, the allocating a resource block to each virtual scheduler according to the generated candidate resource list includes:
separately performing the following steps by taking i as an integer from 1 to N:
comparing, for an i^{th} resource block, weights corresponding to the i^{th} resource block that are in the generated candidate resource lists; and
allocating the i^{th} resource block for a virtual scheduler corresponding to a candidate resource list with a largest weight, where N is a total quantity of resource blocks included in the cell group.

For the k^{th} (k=1, 2, ..., N) resource block of the air interface transmission resource, Qi(k) values (i=1, 2, 3, 12, 13, 23, 123) corresponding to the resource block that are in candidate resource lists of all virtual schedulers are compared, and the resource block is allocated to a virtual scheduler VS-i with a largest Qi(k). If the following case that Qi(k) = Qj(k) occurs, the resource block may be randomly allocated to one of the virtual schedulers, or the resource block may be allocated to a virtual scheduler with a higher priority according to a priority order agreed upon in advance.

In an aspect of the present invention, a UE is matched with a virtual scheduler, a candidate resource list is generated for each virtual scheduler, or the like. In a centralized solution, the virtual scheduler refers to each distributed virtual scheduler in the centralized virtual scheduler. In a distributed solution, the virtual scheduler refers to each distributed virtual scheduler.

Referring to FIG. 7, based on a same inventive concept, an aspect of the present invention provides a coordinated multipoint transmission apparatus. The apparatus may include a receiving module 701 and a matching module 702. In a centralized solution, the apparatus may be the centralized virtual scheduler. In a distributed solution, the apparatus may be a base station in the cell group. It should be noted that the centralized virtual scheduler may be considered as a combination of multiple distributed virtual schedulers, and there is a controller configured to control the distributed virtual schedulers. That is, if the apparatus is the centralized virtual scheduler, the apparatus is actually the controller configured to control the distributed virtual schedulers that form the centralized virtual scheduler.

The receiving module 701 is configured to receive candidate cell lists fed back by at least two user equipments UEs in a cell group, where the cell group includes at least one cell, the candidate cell list includes information about a cell measured by the UE that feeds back the candidate cell list, and each candidate cell list corresponds to one UE.

The matching module 702 is configured to respectively match the at least two UEs with corresponding virtual schedulers according to the received candidate cell lists, where there is a one-to-one correspondence between virtual scheduler and a cell set, so that the at least two UEs are respectively scheduled by the matched virtual schedulers to perform coordinated multipoint transmission in corresponding cell sets.

Optionally, in an aspect of the present invention, an intersection set exists between cell sets corresponding to the virtual schedulers with which the at least two UEs are respectively matched.

Optionally, in an aspect of the present invention, the receiving module 701 is specifically configured to receive the candidate cell lists sent by the at least two UEs in the cell group by using K base stations, where K is a positive integer.

Optionally, in an aspect of the present invention, the receiving module 701 is specifically configured to receive the candidate cell list fed back by a UE in a cell corresponding to the apparatus, and receive the candidate cell list of a UE sent by a base station to which a cell, in the cell group, other than the cell corresponding to the apparatus belongs.

Optionally, in an aspect of the present invention, the matching module 702 is specifically configured to determine information about a cell included in the candidate cell list reported by each UE; determine, according to the determined information about the cell, a cell corresponding to each UE; and determine a virtual scheduler corresponding to a cell set formed by all cells corresponding to a corresponding UE, and match the UE with the virtual scheduler.

Optionally, in an aspect of the present invention, the apparatus further includes a generating module and an allocation module.

The generating module is configured to generate a candidate resource list for each virtual scheduler according to the received candidate cell list, where the candidate resource list includes information about an air interface resource block allocated to a corresponding virtual scheduler.

The allocation module is configured to allocate a resource block to each virtual scheduler according to the generated candidate resource list.

Optionally, in an aspect of the present invention, the generating module is specifically configured to determine a weight of each resource block for each virtual scheduler; and generate the candidate resource list for a corresponding virtual scheduler according to the determined weight of each resource block for each virtual scheduler.

Optionally, in an aspect of the present invention, that the generating module is specifically configured to determine a weight of each resource block for each virtual scheduler is specifically: counting, for each virtual scheduler, a total quantity of times that each resource block is valid in the candidate cell list fed back by each UE that belongs to the virtual scheduler; and using the total quantity of times that each resource block is valid as a weight of a corresponding resource block.

Optionally, in an aspect of the present invention, the allocation module is specifically configured to separately perform the following steps by taking i as an integer from 1 to N:
comparing, for an i^{th} resource block, weights corresponding to the i^{th} resource block that are in the generated candidate resource lists; and
allocating the i^{th} resource block for a virtual scheduler corresponding to a candidate resource list with a largest weight, where N is a total quantity of resource blocks included in the cell group.

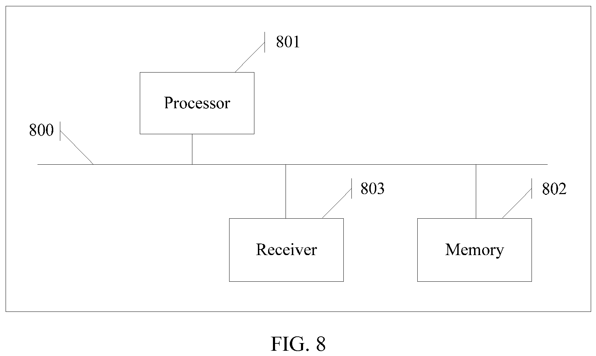

Referring to FIG. 8, based on a same inventive concept, an aspect of the present invention provides a coordinated multipoint transmission apparatus. The apparatus may include a processor 801, a memory 802, and a receiver 803 that are connected to a same bus 800. The memory 802 is configured to store an instruction needed by the processor 801 to execute a program. The receiver 803 is configured to receive candidate cell lists fed back by at least two user equipments UEs in a cell group, where the cell group includes at least one cell, the candidate cell list includes information about a cell measured by the UE that feeds back the candidate cell list, and each candidate cell list corresponds to one UE. The processor 801 is configured to read the instruction stored in the memory 802 to perform the following method: respectively matching the at least two UEs with corresponding virtual schedulers according to the received candidate cell lists, where there is a one-to-one correspondence between virtual scheduler and a cell set, so that the at least two UEs are respectively scheduled by the matched virtual schedulers to perform coordinated multipoint transmission in corresponding cell sets.

In a centralized solution, the apparatus may be the centralized virtual scheduler. In a distributed solution, the apparatus may be a base station in the cell group. It should be noted that the centralized virtual scheduler may be considered as a combination of multiple distributed virtual schedulers, and there is a controller configured to control the distributed virtual schedulers. That is, if the apparatus is the centralized virtual scheduler, the apparatus is actually the controller configured to control the distributed virtual schedulers that form the centralized virtual scheduler.

Optionally, in an aspect of the present invention, an intersection set exists between cell sets corresponding to the virtual schedulers with which the at least two UEs are respectively matched.

Optionally, in an aspect of the present invention, the receiver 803 is specifically configured to receive the candidate cell lists sent by the at least two UEs in the cell group by using K base stations, where K is a positive integer.

Optionally, in an aspect of the present invention, the receiver 803 is specifically configured to receive the candidate cell list fed back by a UE in a cell corresponding to the apparatus, and receive the candidate cell list of a UE sent by a base station to which a cell, in the cell group, other than the cell corresponding to the apparatus belongs.

Optionally, in an aspect of the present invention, the processor 801 is specifically configured to execute the instruction to: determine information about a cell included in the candidate cell list reported by each UE; determine, according to the determined information about the cell, a cell corresponding to each UE; and determine a virtual scheduler corresponding to a cell set formed by all cells corresponding to a corresponding UE, and match the UE with the virtual scheduler.

Optionally, in an aspect of the present invention, the processor 801 is further configured to execute the instruction to: after the at least two UEs are respectively matched with the corresponding virtual schedulers, generate a candidate resource list for each virtual scheduler according to the received candidate cell list, where the candidate resource list includes information about an air interface resource block allocated to a corresponding virtual scheduler; and allocate a resource block to each virtual scheduler according to the generated candidate resource list.

Optionally, in an aspect of the present invention, that the processor 801 is further configured to generate a candidate resource list for each virtual scheduler according to the received candidate cell list is specifically: executing the instruction to determine a weight of each resource block for each virtual scheduler and generate the candidate resource list for a corresponding virtual scheduler according to the determined weight of each resource block for each virtual scheduler.

Optionally, in an aspect of the present invention, that the processor 801 is further configured to execute the instruction to determine a weight of each resource block for each virtual scheduler is specifically: executing the instruction to count, for each virtual scheduler, a total quantity of times that each resource block is valid in the candidate cell list fed back by each UE that belongs to the virtual scheduler, and use the total quantity of times that each resource block is valid as a weight of a corresponding resource block.

Optionally, in an aspect of the present invention, that the processor 801 is further configured to allocate a resource block to each virtual scheduler according to the generated candidate resource list is specifically: executing the instruction to separately perform the following steps by taking i as an integer from 1 to N:
comparing, for an i^{th} resource block, weights corresponding to the i^{th} resource block that are in the generated candidate resource lists; and
allocating the i^{th} resource block for a virtual scheduler corresponding to a candidate resource list with a largest weight, where N is a total quantity of resource blocks included in the cell group.

A coordinated multipoint transmission method may include: receiving candidate cell lists fed back by at least two user equipments UEs in a cell group, where the cell group includes at least one cell, the candidate cell list includes information about a cell measured by the UE that feeds back the candidate cell list, and each candidate cell list corresponds to one UE; and respectively matching the at least two UEs with corresponding virtual schedulers according to the received candidate cell lists, where there is a one-to-one correspondence between virtual scheduler and a cell set, so that the at least two UEs are respectively scheduled by the matched virtual schedulers to perform coordinated multipoint transmission in corresponding cell sets.

In aspects of the present invention, a candidate cell list fed back by a UE may be received, so that each UE is matched with a corresponding virtual scheduler, that is, a UE is matched with a virtual scheduler according to a candidate cell list reported by the UE, so that each UE can be matched with a corresponding cell set with better transmission quality, thereby improving transmission quality of the UE. In addition, different UEs may be scheduled by different virtual schedulers, so as to implement joint transmission in different cell sets. Each UE may be scheduled by a corresponding virtual scheduler, thereby alleviating load of a base station, and enhancing scheduling efficiency.

It may be clearly understood by a person skilled in the art that, for the purpose of convenient and brief description, division of the foregoing functional modules is taken as an example for illustration. In actual application, the foregoing functions can be allocated to different functional modules and implemented according to a requirement, that is, an inner structure of an apparatus is divided into different functional modules to implement all or some of the functions described above. For a detailed working process of the foregoing system, apparatus, and unit, reference may be made to a corresponding process in the foregoing methods, and details are not described herein.

In the several aspects provided in the present application, it should be understood that the disclosed system, apparatus, and method may be implemented in other manners. For example, the described apparatus embodiment is merely exemplary. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions above.

In addition, functional units of the present application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present application essentially, or the part contributing to the prior art, or all or some of the technical solutions may be implemented in the form of a software product. The computer software product is stored in a storage medium and includes several instructions for instructing a computer device (which may be a personal computer, a server, or a network device) or a processor (processor) to perform all or some of the steps of the methods described in the embodiments of the present application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing aspects are merely used to describe the technical solutions of the present application. The foregoing examples are merely intended to help understand the method and core idea of the present invention, and shall not be construed as a limitation on the present invention. Any variation or replacement readily figured out by a person skilled in the art within the technical scope defined by the claims shall fall within the protection scope of the present invention.

## Claims

1. A coordinated multipoint transmission method, comprising:
receiving, by a receiving module of a coordinated multipoint transmission apparatus, candidate cell lists fed back by at least two user equipments, UEs in a cell group, wherein the cell group comprises at least one cell, each candidate cell list comprises information about a cell measured by the UE that feeds back the candidate cell list and comprises a first part that includes one bit that is used to identify whether the UE that feeds back the candidate cell list is independent user equipment or coordinated user, a second part that includes N bits, where N is a quantity of resource blocks of an air interface transmission resource in the cell group, and corresponds to information about the N resource blocks of the air interface transmission resource,
and comprises a further part that includes two bits used to indicate a cell to which a resource block in the candidate cell list belongs, wherein if the UE is independent user equipment the UE generates only one candidate cell list or if the UE is coordinated user equipment the UE generates multiple candidate cell lists and each candidate cell list is for one cell, and each candidate cell list corresponds to one UE; and
respectively matching, by a matching module of the coordinated multipoint transmission apparatus, the at least two UEs with corresponding virtual schedulers according to the received candidate cell lists, wherein virtual schedulers respectively correspond to potential cell sets that are possible subsets of the cells that form cell sets to perform coordinated transmission for a corresponding UE and there is a one-to-one correspondence between a virtual scheduler and a cell set, wherein the at least two UEs are respectively scheduled by the matched virtual schedulers to perform coordinated multipoint transmission in corresponding cell sets;
wherein the respectively matching the at least two UEs with corresponding virtual schedulers according to the received candidate cell lists comprises:
determining information about a cell comprised in the candidate cell list reported by each UE;
determining, according to the determined information about the cell, a cell corresponding to each UE; and
determining a virtual scheduler corresponding to a cell set formed by all cells corresponding to each UE, and matching the UE with the virtual scheduler, wherein a virtual scheduler to which the UE is matched is determined according to a bit combination of the two bits of the further part of the candidate cell list fed back by the UE; and
wherein different subsets of cells of the cell group form the cell sets and the matched virtual schedulers are responsible for resource scheduling for the cell sets.

2. The method according to claim 1, wherein an intersection set exists between cell sets corresponding to the virtual schedulers with which the at least two UEs are respectively matched.

3. The method according to claim 1 or 2, wherein the receiving candidate cell lists fed back by at least two UEs in a cell group comprises:
receiving the candidate cell lists sent by the at least two UEs in the cell group by using K base stations, wherein K is a positive integer and wherein the K base stations are base stations to which cells in the cell group belong.

4. The method according to claim 1 or 2, wherein the receiving candidate cell lists fed back by at least two UEs in a cell group comprises:
receiving the candidate cell list fed back by a UE in a cell corresponding to a receiving device wherein the receiving device is configured to execute the method; and
receiving the candidate cell list of a UE sent by a base station to which a cell, in the cell group, other than the cell corresponding to the receiving device belongs.

5. The method according to any one of claims 1 to 4, wherein after the respectively matching the at least two UEs with corresponding virtual schedulers, the method further comprises:
generating a candidate resource list for each virtual scheduler according to the received candidate cell list, wherein the candidate resource list comprises information about an air interface resource block allocated to a corresponding virtual scheduler; and
allocating a resource block to each virtual scheduler according to the generated candidate resource list.

6. The method according to claim 5, wherein the generating a candidate resource list for each virtual scheduler according to the received candidate cell list comprises:
determining a weight of each resource block for each virtual scheduler, wherein the weight indicates a degree of necessity, wherein a larger value indicates a higher degree of necessity, that is, indicates a larger weight of the resource block, and a smaller value indicates a lower degree of necessity, that is, indicates a smaller weight of the resource block; and
generating the candidate resource list for a corresponding virtual scheduler according to the determined weight of each resource block for each virtual scheduler.

7. The method according to claim 6, wherein the determining a weight of each resource block for each virtual scheduler comprises:
counting, for each virtual scheduler, a total quantity of times that each resource block is valid in the candidate cell list fed back by each UE that belongs to the virtual scheduler, wherein that a resource block is valid means that the resource block is one of a number of first resource blocks with better signal quality or signal strength in resource blocks measured by a UE; and
using the total quantity of times that each resource block is valid as a weight of a corresponding resource block.

8. The method according to any one of claims 5 to 7, wherein the allocating a resource block to each virtual scheduler according to the generated candidate resource list comprises:
separately performing the following steps by taking i as an integer from 1 to N:
comparing, for an i^{th} resource block, weights corresponding to the i^{th} resource block that are in the generated candidate resource lists; and
allocating the i^{th} resource block to a virtual scheduler corresponding to a candidate resource list with a largest weight, wherein N is a total quantity of resource blocks comprised in the cell group.

9. A coordinated multipoint transmission apparatus, comprising:
a receiving module, configured to receive candidate cell lists fed back by at least two user equipments UEs in a cell group, wherein the cell group comprises at least one cell, the candidate cell list comprises information about a cell measured by the UE that feeds back the candidate cell list and comprises a first part that includes one bit that is used to identify whether the UE that feeds back the candidate list is independent user equipment or coordinated user equipment, a second part that includes N bits, where N is a quantity of resource blocks of an air interface transmission resource in the cell group, and corresponds to information about the N resource blocks of the air interface transmission resource,
and comprises a further part that includes two bits used to indicate a cell to which a resource block in the candidate cell list belongs, wherein if the UE is independent user equipment the UE generates only one candidate cell list or if the UE is coordinated user equipment the UE generates multiple candidate cell lists and each candidate cell list is for one cell, and each candidate cell list corresponds to one UE; and
a matching module, configured to respectively match the at least two UEs with corresponding virtual schedulers according to the received candidate cell lists, wherein virtual schedulers respectively correspond to potential cell sets that are possible subsets of the cells that form cell sets to perform coordinated transmission for a corresponding UE and there is a one-to-one correspondence between a virtual scheduler and a cell set, wherein the at least two UEs are respectively scheduled by the matched virtual schedulers to perform coordinated multipoint transmission in corresponding cell sets;
wherein the matching module is configured to determine information about a cell comprised in the candidate cell list reported by each UE; determine, according to the determined information about the cell, a cell corresponding to each UE; and determine a virtual scheduler corresponding to a cell set formed by all cells corresponding to each UE, and match the UE with the virtual scheduler, wherein a virtual scheduler to which the UE is matched is determined according to a bit combination of the two bits of the further part of the candidate cell list fed back by the UE; and
wherein different subsets of cells of the cell group form the cell sets and the matched virtual schedulers are responsible for resource scheduling for the cell sets.

10. The apparatus according to claim 9, wherein an intersection set exists between cell sets corresponding to the virtual schedulers with which the at least two UEs are respectively matched.

11. The apparatus according to claim 9 or 10, wherein the receiving module is configured to receive the candidate cell lists sent by the at least two UEs in the cell group by using K base stations, wherein K is a positive integer and wherein the K base stations are base stations to which cells in the cell group belong .

12. The apparatus according to claim 9 or 10, wherein the receiving module is configured to receive the candidate cell list fed back by a UE in a cell corresponding to the apparatus, and receive the candidate cell list of a UE sent by a base station to which a cell, in the cell group, other than the cell corresponding to the apparatus belongs.

13. The apparatus according to any one of claims 9 to 12, wherein the apparatus further comprises a generating module and an allocation module, wherein
the generating module is configured to generate a candidate resource list for each virtual scheduler according to the received candidate cell list, wherein the candidate resource list comprises information about an air interface resource block allocated to a corresponding virtual scheduler; and
the allocation module is configured to allocate a resource block to each virtual scheduler according to the generated candidate resource list.

14. The apparatus according to any one of claims 9 to 13, wherein the generating module is configured to determine a weight of each resource block for each virtual scheduler; and generate the candidate resource list for a corresponding virtual scheduler according to the determined weight of each resource block for each virtual scheduler.

15. The apparatus according to claim 14, wherein that the generating module is configured to determine a weight of each resource block for each virtual scheduler is specifically: counting, for each virtual scheduler, a total quantity of times that each resource block is valid in the candidate cell list fed back by each UE that belongs to the virtual scheduler, wherein the weight indicates a degree of necessity, wherein a larger value indicates a higher degree of necessity, that is, indicates a larger weight of the resource block, and a smaller value indicates a lower degree of necessity, that is, indicates a smaller weight of the resource block; and using the total quantity of times that each resource block is valid as a weight of a corresponding resource block, wherein that a resource block is valid means that the resource block is one of a number of first resource blocks with better signal quality or signal strength in resource blocks measured by a UE.

16. The apparatus according to any one of claims 13 to 15, wherein the allocation module is configured to separately perform the following steps by taking i as an integer from 1 to N:
comparing, for an i^{th} resource block, weights corresponding to the i^{th} resource block that are in the generated candidate resource lists; and
allocating the i^{th} resource block for a virtual scheduler corresponding to a candidate resource list with a largest weight, wherein N is a total quantity of resource blocks comprised in the cell group.

## Patentansprüche

1. Verfahren für koordinierte Mehrpunktübertragung, aufweisend:
Empfangen, durch ein Empfangsmodul einer Vorrichtung für koordinierte Mehrpunktübertragung, von Kandidatenzellenlisten, die durch mindestens zwei Benutzereinrichtungen, UEs in einer Zellengruppe, zurückgeführt werden, wobei die Zellengruppe mindestens eine Zelle aufweist, wobei jede Kandidatenzellenliste Information über eine Zelle aufweist, welche durch die UE gemessen wird, die die Kandidatenzellenliste zurückführt, und einen ersten Teil, der ein Bit enthält, das zum Identifizieren benutzt wird, ob die UE, die die Kandidatenzellenliste zurückführt, eine unabhängige Benutzereinrichtung oder ein koordinierter Benutzer ist, einen zweiten Teil, der N Bits enthält, wobei N eine Menge von Ressourcenblöcken einer Luftschnittstellenübertragungsressource in der Zellengruppe ist und Information über die N Ressourcenblöcke der Luftschnittstellenübertragungsressource entspricht, und einen weiteren Teil aufweist, der zwei Bits enthält, die zum Anzeigen einer Zelle benutzt werden, zu der ein Ressourcenblock in der Kandidatenzellenliste gehört, wobei, wenn die UE eine unabhängige Benutzereinrichtung ist, die UE nur ein Kandidatenzellenliste erstellt, oder, wenn die UE eine koordinierte Benutzereinrichtung ist, die UE mehrere Kandidatenzellenlisten erstellt und jede Kandidatenzellenliste für eine Zelle ist und jede Kandidatenzellenliste einer UE entspricht; und
jeweiliges Zusammenpassen, durch ein Zusammenpassungsmodul der Vorrichtung für koordinierte Mehrpunktübertragung, der mindestens zwei UEs mit entsprechenden virtuellen Zeitplanern gemäß den empfangenen Kandidatenzellenlisten, wobei virtuelle Zeitplaner jeweils potentiellen Zellensätzen entsprechen, die mögliche Teilsätze der Zellen sind, die Zellensätze zum Ausführen von koordinierter Übertragung für eine entsprechende UE ausbilden und eine Eins-zu-Eins-Entsprechung zwischen einem virtuellen Zeitplaner und einem Zellensatz vorliegt, wobei die mindestens zwei UEs jeweils durch die zusammengepassten virtuellen Zeitplaner zum Ausführen von koordinierter Mehrpunktübertragung in entsprechenden Zellensätzen eingeplant werden;
wobei das jeweilige Zusammenpassen der mindestens zwei UEs mit entsprechenden virtuellen Zeitplanern gemäß den empfangenen Kandidatenzellenlisten folgendes aufweist:
Bestimmen von Information über eine Zelle, die in der Kandidatenzellenliste enthalten ist, welche durch jede UE gemeldet wird;
Bestimmen, gemäß der bestimmten Information über die Zelle, einer Zelle, die jeder UE entspricht; und
Bestimmen eines virtuellen Zeitplaners entsprechend einem Zellensatz, der durch alle Zellen ausgebildet ist, die jeder UE entsprechen, und Zusammenpassen der UE mit dem virtuellen Zeitplaner, wobei ein virtueller Zeitplaner, mit dem die UE zusammengepasst ist, gemäß einer Bitkombination der zwei Bits des weiteren Teils der Kandidatenzellenliste, die durch die UE zurückgeführt wird, bestimmt wird; und
wobei verschiedene Teilsätze von Zellen der Zellengruppe die Zellensätze ausbilden und die zusammengepassten virtuellen Zeitplaner für Ressourcenzeitplanung für die Zellensätze zuständig sind.

2. Verfahren nach Anspruch 1, wobei ein Überschneidungssatz zwischen Zellensätzen vorliegt, die den virtuellen Zeitplanern entsprechen, mit denen die mindestens zwei UEs jeweils zusammengepasst werden.

3. Verfahren nach einem der Ansprüche 1 oder 2, wobei das Empfangen von Kandidatenzellenlisten, die durch mindestens zwei UEs in einer Zellengruppe zurückgeführt werden, aufweist:
Empfangen der Kandidatenzellenlisten, die durch die mindestens zwei UEs in der Zellgruppe gesendet werden, unter Benutzung von K Basisstationen, wobei K eine positive Ganzzahl ist, und wobei die K Basisstationen Basisstationen sind, zu denen Zellen in der Zellgruppe gehören.

4. Verfahren nach einem der Ansprüche 1 oder 2, wobei das Empfangen von Kandidatenzellenlisten, die durch mindestens zwei UEs in einer Zellengruppe zurückgeführt werden, aufweist:
Empfangen der Kandidatenzellenlisten, die durch eine UE in einer Zelle zurückgeführt werden, welche einem Empfangsgerät entsprechen, wobei das Empfangsgerät zum Ausführen des Verfahrens konfiguriert ist; und
Empfangen der Kandidatenzellenliste einer UE, die durch eine Basisstation gesendet wird, zu der eine Zelle, in der Zellengruppe, die eine andere Zelle ist als die Zelle, die dem Empfangsgerät entspricht, gehört.

5. Verfahren nach einem der Ansprüche 1 bis 4, wobei, nach dem jeweiligen Zusammenpassen der mindestens zwei UEs mit entsprechenden virtuellen Zeitplanern, das Verfahren ferner aufweist:
Erstellen einer Kandidatenressourcenliste für jeden virtuellen Zeitplaner gemäß der empfangenen Kandidatenzellenliste, wobei die Kandidatenzellenliste Information über einen Luftschnittstellenressourcenblock aufweist, der einem entsprechenden virtuellen Zeitplaner zugewiesen ist; und
Zuweisen eines Ressourcenblocks zu jedem virtuellen Zeitplaner gemäß der erstellten Kandidatenressourcenliste.

6. Verfahren nach Anspruch 5, wobei das Erstellen einer Kandidatenressourcenliste für jeden virtuellen Zeitplaner gemäß der empfangenen Kandidatenzellenliste aufweist:
Bestimmen einer Gewichtung von jedem Ressourcenblock für jeden Zeitplaner, wobei die Gewichtung einen Bedarfsgrad anzeigt, wobei ein größerer Wert einen höheren Bedarfsgrad anzeigt, d.h. eine größere Gewichtung des Ressourcenblocks anzeigt, und ein kleinerer Wert einen niedrigeren Bedarfsgrad anzeigt, d.h. eine kleinere Gewichtung des Ressourcenblocks anzeigt; und
Erstellen der Kandidatenressourcenliste für einen entsprechenden virtuellen Zeitplaner gemäß der bestimmten Gewichtung von jedem Ressourcenblock für jeden virtuellen Zeitplaner.

7. Verfahren nach Anspruch 6, wobei das Bestimmen einer Gewichtung von jedem Ressourcenblock für jeden Zeitplaner aufweist:
Zählen, für jeden virtuellen Zeitplaner, einer Gesamtmenge von Malen, zu denen jeder Ressourcenblock in der Kandidatenzellenliste gültig ist, die durch jede UE zurückgeführt wird, welche zu dem virtuellen Zeitplaner gehört, wobei der Fakt, dass ein Ressourcenblock gültig ist, bedeutet, dass der Ressourcenblock einer einer Anzahl von ersten Ressourcenblöcken mit besserer Signalqualität oder Signalstärke in Ressourcenblöcken ist, die durch eine UE gemessen werden; und
Benutzen der Gesamtmenge von Malen, zu denen jeder Ressourcenblock gültig ist, als eine Gewichtung eines entsprechenden Ressourcenblocks.

8. Verfahren nach einem der Ansprüche 5 bis 7, wobei das Zuweisen eines Ressourcenblocks zu jedem virtuellen Zeitplaner gemäß der erstellten Kandidatenressourcenliste aufweist:
separates Ausführen der folgenden Schritte unter Annahme von i als Ganzzahl von 1 bis N:
Vergleichen, für einen i-ten Ressourcenblock, von Gewichtungen, die dem i-ten Ressourcenblock entsprechen und die sich in den erstellten Kandidatenressourcenlisten befinden; und
Zuweisen des i-ten Ressourcenblocks zu einem virtuellen Zeitplaner, der einer Kandidatenressourcenliste mit einer größten Gewichtung entspricht, wobei N eine Gesamtmenge von Ressourcenblöcken ist, die in der Zellengruppe enthalten sind.

9. Vorrichtung für koordinierte Mehrpunktübertragung, aufweisend:
ein Empfangsmodul, das zum Empfangen von Kandidatenzellenlisten konfiguriert ist, die durch mindestens zwei Benutzereinrichtungen, UEs in einer Zellengruppe, zurückgeführt werden, wobei die Zellengruppe mindestens eine Zelle aufweist, wobei jede Kandidatenzellenliste Information über eine Zelle aufweist, welche durch die UE gemessen wird, die die Kandidatenzellenliste zurückführt, und einen ersten Teil, der ein Bit enthält, das zum Identifizieren benutzt wird, ob die UE, die die Kandidatenzellenliste zurückführt, eine unabhängige Benutzereinrichtung oder ein koordinierter Benutzer ist, einen zweiten Teil, der N Bits enthält, wobei N eine Menge von Ressourcenblöcken einer Luftschnittstellenübertragungsressource in der Zellengruppe ist und Information über die N Ressourcenblöcke der Luftschnittstellenübertragungsressource entspricht, und einen weiteren Teil aufweist, der zwei Bits enthält, die zum Anzeigen einer Zelle benutzt werden, zu der ein Ressourcenblock in der Kandidatenzellenliste gehört, wobei, wenn die UE eine unabhängige Benutzereinrichtung ist, die UE nur ein Kandidatenzellenliste erstellt, oder, wenn die UE eine koordinierte Benutzereinrichtung ist, die UE mehrere Kandidatenzellenlisten erstellt und jede Kandidatenzellenliste für eine Zelle ist und jede Kandidatenzellenliste einer UE entspricht; und
ein Zusammenpassungsmodul, das zum jeweiligen Zusammenpassen der mindestens zwei UEs mit entsprechenden virtuellen Zeitplanern gemäß den empfangenen Kandidatenzellenlisten konfiguriert ist, wobei virtuelle Zeitplaner jeweils potentiellen Zellensätzen entsprechen, die mögliche Teilsätze der Zellen sind, die Zellensätze zum Ausführen von koordinierter Übertragung für eine entsprechende UE ausbilden und eine Eins-zu-Eins-Entsprechung zwischen einem virtuellen Zeitplaner und einem Zellensatz vorliegt, wobei die mindestens zwei UEs jeweils durch die zusammengepassten virtuellen Zeitplaner zum Ausführen von koordinierter Mehrpunktübertragung in entsprechenden Zellensätzen eingeplant werden;
wobei das Zusammenpassungsmodul zum Bestimmen von Information über eine Zelle, die in der Kandidatenzellenliste enthalten ist, welche durch jede UE gemeldet wird, zum Bestimmen, gemäß der bestimmten Information über die Zelle, einer Zelle, die jeder UE entspricht, und zum Bestimmen eines virtuellen Zeitplaners entsprechend einem Zellensatz, der durch alle Zellen ausgebildet ist, die jeder UE entsprechen, und zum Zusammenpassen der UE mit dem virtuellen Zeitplaner konfiguriert ist, wobei ein virtueller Zeitplaner, mit dem die UE zusammengepasst ist, gemäß einer Bitkombination der zwei Bits des weiteren Teils der Kandidatenzellenliste, die durch die UE zurückgeführt wird, bestimmt wird; und
wobei verschiedene Teilsätze von Zellen der Zellengruppe die Zellensätze ausbilden und die zusammengepassten virtuellen Zeitplaner für Ressourcenzeitplanung für die Zellensätze zuständig sind.

10. Vorrichtung nach Anspruch 9, wobei ein Überschneidungssatz zwischen Zellensätzen vorliegt, die den virtuellen Zeitplanern entsprechen, mit denen die mindestens zwei UEs jeweils zusammengepasst werden.

11. Vorrichtung nach einem der Ansprüche 9 oder 10, wobei das Empfangsmodul zum Empfangen der Kandidatenzellenlisten, die durch die mindestens zwei UEs in der Zellgruppe gesendet werden, unter Benutzung von K Basisstationen konfiguriert ist, wobei K eine positive Ganzzahl ist, und wobei die K Basisstationen Basisstationen sind, zu denen Zellen in der Zellgruppe gehören.

12. Vorrichtung nach einem der Ansprüche 9 oder 10, wobei das Empfangsmodul zum Empfangen der Kandidatenzellenlisten, die durch eine UE in einer Zelle zurückgeführt werden, welche der Vorrichtung entsprechen, und zum Empfangen der Kandidatenzellenliste einer UE konfiguriert ist, die durch eine Basisstation gesendet wird, zu der eine Zelle, in der Zellengruppe, die eine andere Zelle ist als die Zelle, die dem Empfangsgerät entspricht, gehört.

13. Vorrichtung nach einem der Ansprüche 9 bis 12, wobei die Vorrichtung ferner ein Erstellungsmodul und ein Zuweisungsmodul aufweist, wobei das Erstellungsmodul zum Erstellen einer Kandidatenressourcenliste für jeden virtuellen Zeitplaner gemäß der empfangenen Kandidatenzellenliste konfiguriert ist, wobei die Kandidatenzellenliste Information über einen Luftschnittstellenressourcenblock aufweist, der einem entsprechenden virtuellen Zeitplaner zugewiesen ist; und
das Zuweisungsmodul zum Zuweisen eines Ressourcenblocks zu jedem virtuellen Zeitplaner gemäß der erstellten Kandidatenressourcenliste konfiguriert ist.

14. Vorrichtung nach einem der Ansprüche 9 bis 13, wobei das Erstellungsmodul zum Bestimmen einer Gewichtung von jedem Ressourcenblock für jeden Zeitplaner und zum Erstellen der Kandidatenressourcenliste für einen entsprechenden virtuellen Zeitplaner gemäß der bestimmten Gewichtung von jedem Ressourcenblock für jeden virtuellen Zeitplaner konfiguriert ist.

15. Vorrichtung nach Anspruch 14, wobei der Fakt, dass das Erstellungsmodul zum Bestimmen einer Gewichtung von jedem Ressourcenblock für jeden Zeitplaner konfiguriert ist, spezifisch ist: Zählen, für jeden virtuellen Zeitplaner, einer Gesamtmenge von Malen, zu denen jeder Ressourcenblock in der Kandidatenzellenliste gültig ist, die durch jede UE zurückgeführt wird, welche zu dem virtuellen Zeitplaner gehört, wobei die Gewichtung einen Bedarfsgrad anzeigt, wobei ein größerer Wert einen höheren Bedarfsgrad anzeigt, d.h. eine größere Gewichtung des Ressourcenblocks anzeigt, und ein kleinerer Wert einen niedrigeren Bedarfsgrad anzeigt, d.h. eine kleinere Gewichtung des Ressourcenblocks anzeigt, und Benutzen der Gesamtmenge von Malen, zu denen jeder Ressourcenblock gültig ist, als eine Gewichtung eines entsprechenden Ressourcenblocks, wobei der Fakt, dass ein Ressourcenblock gültig ist, bedeutet, dass der Ressourcenblock einer einer Anzahl von ersten Ressourcenblöcken mit besserer Signalqualität oder Signalstärke in Ressourcenblöcken ist, die durch eine UE gemessen werden.

16. Vorrichtung nach einem der Ansprüche 13 bis 15, wobei das Zuweisungsmodul zum separaten Ausführen der folgenden Schritte unter Annahme von i als Ganzzahl von 1 bis N konfiguriert ist:
Vergleichen, für einen i-ten Ressourcenblock, von Gewichtungen, die dem i-ten Ressourcenblock entsprechen und die sich in den erstellten Kandidatenressourcenlisten befinden; und
Zuweisen des i-ten Ressourcenblocks zu einem virtuellen Zeitplaner, der einer Kandidatenressourcenliste mit einer größten Gewichtung entspricht, wobei N eine Gesamtmenge von Ressourcenblöcken ist, die in der Zellengruppe enthalten sind.

## Revendications

1. Procédé de transmission multipoint coordonnée consistant :
à recevoir, au moyen d'un module de réception d'un appareil de transmission multipoint coordonnée, des listes de cellules candidates renvoyées par au moins deux équipements utilisateurs (IE) dans un groupe de cellules, dans lequel le groupe de cellules comprend au moins une cellule, chaque liste de cellules candidates comporte des informations concernant une cellule mesurée par l'équipement utilisateur qui renvoie la liste de cellules candidates et comporte une première partie qui comprend un bit qui est utilisé pour identifier si l'équipement utilisateur, qui renvoie la liste de cellules candidates, est un équipement utilisateur indépendant ou un utilisateur coordonné, une seconde partie qui comprend N bits, où N est une quantité de blocs de ressources d'une ressource de transmission d'interface radio dans le groupe de cellules et correspond à des informations concernant les N blocs de ressources de la ressource de transmission d'interface radio, et comprend une partie supplémentaire qui comprend deux bits utilisés pour indiquer une cellule à laquelle un bloc de ressources dans la liste de cellules candidates appartient, dans lequel, si l'équipement utilisateur est un équipement utilisateur indépendant, l'équipement utilisateur génère une seule liste de cellules candidates ou si l'équipement utilisateur est un équipement utilisateur coordonné, l'équipement utilisateur génère de multiples listes de cellules candidates et chaque liste de cellules candidates est destinée à une seule cellule et chaque liste de cellules candidates correspond à un seul équipement utilisateur ; et
à mettre respectivement en correspondance, au moyen d'un module de mise en correspondance de l'appareil de transmission multipoint coordonnée, les deux, ou plus, équipements utilisateurs avec des programmateurs virtuels correspondants en fonction des listes de cellules candidates reçues, dans lequel des programmateurs virtuels correspondent respectivement à des ensembles de cellules potentiels qui sont des sous-ensembles possibles des cellules qui forment des ensembles de cellules pour réaliser une transmission coordonnée pour un équipement utilisateur correspondant et il y a une correspondance biunivoque entre un programmateur virtuel et un ensemble de cellules, dans lequel les deux, ou plus, équipements utilisateurs sont respectivement programmés par les programmateurs virtuels mis en correspondance pour réaliser une transmission multipoint coordonnée dans des ensembles de cellules correspondants ;
dans lequel la mise en correspondance respective des deux, ou plus, équipements utilisateurs avec des programmateurs virtuels correspondants en fonction des listes de cellules candidates reçues consiste :
à déterminer des informations concernant une cellule incluse dans la liste de cellules candidates rapportée par chaque équipement utilisateur ;
à déterminer, en fonction des informations déterminées concernant la cellule, une cellule correspondant à chaque équipement utilisateur ;
et
à déterminer un programmateur virtuel correspondant à un ensemble de cellules formé par toutes les cellules correspondant à chaque équipement utilisateur et à mettre en correspondance l'équipement utilisateur avec le programmateur virtuel, dans lequel un programmateur virtuel avec lequel l'équipement utilisateur est mis en correspondance est déterminé en fonction d'une combinaison de bits des deux bits de la partie supplémentaire de la liste de cellules candidates renvoyée par l'équipement utilisateur ; et
dans lequel différents sous-ensembles de cellules du groupe de cellules forment les ensembles de cellules et les programmateurs virtuels mis en correspondance sont responsables de la programmation de ressources pour les ensembles de cellules.

2. Procédé selon la revendication 1, dans lequel un ensemble d'intersections existe entre des ensembles de cellules correspondant aux programmateurs virtuels avec lesquels les deux, ou plus, équipements utilisateurs sont respectivement mis en correspondance.

3. Procédé selon la revendication 1 ou 2, dans lequel la réception de listes de cellules candidates renvoyées par au moins deux équipements utilisateurs dans un groupe de cellules consiste :
à recevoir les listes de cellules candidates envoyées par les deux, ou plus, équipements utilisateurs dans le groupe de cellules en utilisant K stations de base, dans lequel K est un nombre entier positif et dans lequel les K stations de base sont des stations de base auxquelles des cellules dans le groupe de cellule appartiennent.

4. Procédé selon la revendication 1 ou 2, dans lequel la réception de listes de cellules candidates renvoyées par au moins deux équipements utilisateurs dans un groupe de cellules consiste :
à recevoir la liste de cellules candidates renvoyée par un équipement utilisateur dans une cellule correspondant à un dispositif de réception, le dispositif de réception étant configuré pour exécuter le procédé ; et
à recevoir la liste de cellules candidates d'un équipement utilisateur envoyée par une station de base à laquelle appartient une cellule, dans le groupe de cellules, autre que la cellule correspondant au dispositif de réception.

5. Procédé selon l'une quelconque des revendications 1 à 4, dans lequel après la mise en correspondance respective des deux, on plus, équipements utilisateurs avec des programmateurs virtuels correspondants, le procédé consiste en outre :
à générer une liste de ressources candidates pour chaque programmateur virtuel en fonction de la liste de cellules candidates reçue, la liste de ressources candidates comportant des informations concernant un bloc de ressources d'interface radio attribué à un programmateur virtuel correspondant ; et
à attribuer un bloc de ressources à chaque programmateur virtuel en fonction de la liste de ressources candidates générée.

6. Procédé selon la revendication 5, dans lequel la génération d'une liste de ressources candidates pour chaque programmateur virtuel en fonction de la liste de cellules candidates reçue, consiste :
à déterminer un poids de chaque bloc de ressources pour chaque programmateur virtuel, dans lequel le poids indique un degré de nécessité, dans lequel une valeur plus importante indique un degré de nécessité plus important, c'est-à-dire indique un poids plus important du bloc de ressources, et une valeur plus petite indique un degré de nécessité plus faible c'est-à-dire indique un poids plus faible du bloc de ressources ; et
à générer la liste de ressources candidates pour un programmateur virtuel correspondant en fonction du poids déterminé de chaque bloc de ressources pour chaque programmateur virtuel.

7. Procédé selon la revendication 6, dans lequel la détermination d'un poids de chaque bloc de ressources pour chaque programmateur virtuel consiste :
à compter, pour chaque programmateur virtuel, un nombre total de fois où chaque bloc de ressources est valide dans la liste de cellules candidates renvoyée par chaque équipement utilisateur qui appartient au programmateur virtuel, dans lequel lorsqu'un bloc de ressources est valide, cela signifie que le bloc de ressources est un bloc de ressources d'un certain nombre de premiers blocs de ressources ayant une meilleure qualité de signal ou une meilleure intensité de signal dans des blocs de ressources mesurés par un équipement utilisateur ; et
à utiliser le nombre total de fois où chaque bloc de ressources est valide, comme poids d'un bloc de ressources correspondant.

8. Procédé selon l'une quelconque des revendications 5 à 7, dans lequel l'attribution d'un bloc de ressources à chaque programmateur virtuel en fonction de la liste de ressources candidates générée consiste :
à effectuer de façon distincte les étapes suivantes en prenant i comme nombre entier compris entre 1 et N ;
à comparer, pour un i^{ème} bloc de ressources, des poids correspondant au i^{ème} bloc de ressources qui sont dans les listes de ressources candidates générées ; et
à attribuer le i^{ème} bloc de ressources à un programmateur virtuel correspondant à une liste de ressources candidates ayant le poids le plus important, dans lequel N est une quantité totale de blocs de ressources inclus dans le groupe de cellules.

9. Appareil de transmission multipoint coordonnée comprenant :
un module de réception, configuré pour recevoir des listes de cellules candidates renvoyées par au moins deux équipements utilisateurs (IE) dans un groupe de cellules, dans lequel le groupe de cellules comprend au moins une cellule, chaque liste de cellules candidates comporte des informations concernant une cellule mesurée par l'équipement utilisateur qui renvoie la liste de cellules candidates et comporte une première partie qui comprend un bit qui est utilisé pour identifier si l'équipement utilisateur, qui renvoie la liste de cellules candidates, est un équipement utilisateur indépendant ou un utilisateur coordonné, une seconde partie qui comprend N bits, où N est une quantité de blocs de ressources d'une ressource de transmission d'interface radio dans le groupe de cellules et correspond à des informations concernant les N blocs de ressources de la ressource de transmission d'interface radio, et comprend une partie supplémentaire qui comprend deux bits utilisés pour indiquer une cellule à laquelle un bloc de ressources dans la liste de cellules candidates appartient, dans lequel, si l'équipement utilisateur est un équipement utilisateur indépendant, l'équipement utilisateur génère une seule liste de cellules candidates ou si l'équipement utilisateur est un équipement utilisateur coordonné, l'équipement utilisateur génère de multiples listes de cellules candidates et chaque liste de cellules candidates est destinée à une seule cellule et chaque liste de cellules candidates correspond à un seul équipement utilisateur ; et
un module de mise en correspondance, configuré pour mettre respectivement en correspondance les deux, ou plus, équipements utilisateurs avec des programmateurs virtuels correspondants en fonction des listes de cellules candidates reçues, dans lequel des programmateurs virtuels correspondent respectivement à des ensembles de cellules potentiels qui sont des sous-ensembles possibles des cellules qui forment des ensembles de cellules pour réaliser une transmission coordonnée pour un équipement utilisateur correspondant et il y a une correspondance biunivoque entre un programmateur virtuel et un ensemble de cellules, dans lequel les deux, ou plus, équipements utilisateurs sont respectivement programmés par les programmateurs virtuels mis en correspondance pour réaliser une transmission multipoint coordonnée dans des ensembles de cellules correspondants ;
dans lequel le module de mise en correspondance est configuré pour déterminer des informations concernant une cellule incluse dans la liste de cellules candidates rapportée par chaque équipement utilisateur ; pour déterminer, en fonction des informations déterminées concernant la cellule, une cellule correspondant à chaque équipement utilisateur ; et pour déterminer un programmateur virtuel correspondant à un ensemble de cellules formé par toutes les cellules correspondant à chaque équipement utilisateur et pour mettre en correspondance l'équipement utilisateur avec le programmateur virtuel, dans lequel un programmateur virtuel avec lequel l'équipement utilisateur est mis en correspondance est déterminé en fonction d'une combinaison de bits des deux bits de la partie supplémentaire de la liste de cellules candidates renvoyée par l'équipement utilisateur ; et
dans lequel différents sous-ensembles de cellules du groupe de cellules forment les ensembles de cellules et les programmateurs virtuels mis en correspondance sont responsables de la programmation de ressources pour les ensembles de cellules.

10. Appareil selon la revendication 9, dans lequel un ensemble d'intersections existe entre des ensembles de cellules correspondant aux programmateurs virtuels avec lesquels les deux, ou plus, équipements utilisateurs sont respectivement mis en correspondance.

11. Appareil selon la revendication 9 ou 10, dans lequel le module de réception est configuré pour recevoir les listes de cellules candidates envoyées par les deux, ou plus, équipements utilisateurs dans le groupe de cellules en utilisant K stations de base, dans lequel K est un nombre entier positif et dans lequel les K stations de base sont des stations de base auxquelles des cellules dans le groupe de cellule appartiennent.

12. Appareil selon la revendication 9 ou 10, dans lequel le module de réception est configuré pour recevoir la liste de cellules candidates renvoyée par un équipement utilisateur dans une cellule correspondant à l'appareil, et pour recevoir la liste de cellules candidates d'un équipement utilisateur envoyée par une station de base à laquelle appartient une cellule, dans le groupe de cellules, autre que la cellule correspondant à l'appareil.

13. Appareil selon l'une quelconque des revendications 9 à 12, dans lequel l'appareil comprend en outre un module de génération et un module d'attribution, dans lequel
le module de génération est configuré pour générer une liste de ressources candidates pour chaque programmateur virtuel en fonction de la liste de cellules candidates reçue, dans lequel la liste de ressources candidates comporte des informations concernant un bloc de ressources d'interface radio attribué à un programmateur virtuel correspondant ; et
le module d'attribution est configuré pour attribuer un bloc de ressources à chaque programmateur virtuel en fonction de la liste de ressources candidates générée.

14. Appareil selon l'une quelconque des revendications 9 à 13, dans lequel le module de génération est configuré pour déterminer un poids de chaque bloc de ressources pour chaque programmateur virtuel ; et pour générer la liste de ressources candidates pour un programmateur virtuel correspondant en fonction du poids déterminé de chaque bloc de ressources pour chaque programmateur virtuel.

15. Appareil selon la revendication 14, dans lequel le fait que le module de génération est configuré pour déterminer un poids de chaque bloc de ressources pour chaque programmateur virtuel, signifie spécialement : compter, pour chaque programmateur virtuel, un nombre total de fois où chaque bloc de ressources est valide dans la liste de cellules candidates renvoyée par chaque équipement utilisateur qui appartient au programmateur virtuel, dans lequel le poids indique un degré de nécessité, dans lequel une valeur plus importante indique un degré de nécessité plus important, c'est-à-dire indique un poids plus important du bloc de ressources, et une valeur plus petite indique un degré de nécessité plus faible, c'est-à-dire indique un poids plus faible du bloc de ressources ; et utiliser le nombre total de fois où chaque bloc de ressources est valide, comme poids d'un bloc de ressources correspondant, dans lequel lorsqu'un bloc de ressources est valide, cela signifie que le bloc de ressources est un bloc de ressources d'un certain nombre de premiers blocs de ressources ayant une meilleure qualité de signal ou une meilleure intensité de signal dans des blocs de ressources mesurés par un équipement utilisateur.

16. Appareil selon l'une quelconque des revendications 13 à 15, dans lequel le module d'attribution est configuré pour effectuer de façon distincte les étapes suivantes en prenant i comme nombre entier compris entre 1 et N ;
pour comparer, pour un i^{ème} bloc de ressources, des poids correspondant au i^{ème} bloc de ressources qui sont dans les listes de ressources candidates générées ; et
pour attribuer le i^{ème} bloc de ressources à un programmateur virtuel correspondant à une liste de ressources candidates ayant le poids le plus important, dans lequel N est une quantité totale de blocs de ressources inclus dans le groupe de cellules.
